# FASCICULE DE BREVET EUROPEEN

(11) **EP 1 168 636 B1**
(45) Date de publication et mention de la délivrance du brevet: **03.05.2006**
(21) Numéro de dépôt: 01401733.9
(22) Date de dépôt: 28.06.2001
(51) Int. Cl.: H04B 1/18

(54) **Dispositif de réception d'un signal radiofréquence dans un téléphone mobile**
Vorrichtung zum Empfang von RF Signalen in einem Mobiltelefon
Device for receiving RF signals in a mobile telephone

(30) Priorité: 29.06.2000 FR 0008441
(43) Date de publication de la demande: 02.01.2002
(73) Titulaire: SAGEM Communication, 75015 Paris (FR)
(72) Inventeur: Bonjour, Fabien, 95000 Cergy (FR)
(74) Mandataire: Schmit, Christian Norbert Marie

(56) Documents cités:
- EP-A- 0 951 147
- NIU G ET AL: "INTERMODULATION CHARACTERISTICS OF UHV/CVD SIGE HBT'S" MINNEAPOLIS, MN, SEPT. 26 - 28, 1999,NEW YORK, NY: IEEE,US, 26 septembre 1999 (1999-09-26), pages 50-53, XP000871903 ISBN: 0-7803-5713-2

## Description

La présente invention a pour objet un dispositif de réception d'un signal radiofréquence dans un téléphone mobile. Elle trouve particulièrement son application dans la téléphonie mobile, notamment dans un téléphone mobile. On obtient ainsi dans un dispositif de réception du téléphone mobile un nombre réduit d'éléments. Un but de l'invention est de réaliser un dispositif de réception permettant de simplifier une architecture d'un dispositif de réception tout en améliorant un rapport signal à bruit. De plus, on diminue ainsi un coût de fabrication du téléphone mobile.

Actuellement, un dispositif de réception, notamment d'un téléphone mobile, comporte un filtre passe-bande amont, un filtre passe-bande aval, ainsi qu'un amplificateur à faible bruit et une antenne d'émission réception. Une entrée de l'amplificateur à faible bruit est reliée à une sortie du filtre passe-bande amont. Une sortie de l'amplificateur à faible bruit est reliée à une entrée du filtre passe-bande aval. Une entrée du filtre passe-bande amont est reliée quant à elle à l'antenne du téléphone mobile. Une sortie du filtre passe-bande aval est généralement reliée à une première entrée d'un mélangeur. Ce mélangeur est généralement le premier élément d'un dispositif de démodulation. Le mélangeur peut être à réjection d'image. Un signal à une fréquence image est un signal parasite présent en sortie du mélangeur et dont une valeur de fréquence est égale à la valeur de fréquence du signal en sortie du filtre passe-bande aval moins une valeur de fréquence d'un oscillateur relié à une deuxième entrée du mélangeur. Dans ce cas le filtre passe-bande aval est inutile.

En général, les deux filtres passe-bande amont et aval sont présents. Ainsi, on répartit une sélectivité globale voulue, pour ce dispositif de réception, sur les deux filtres passe-bande amont et aval. Si le filtre passe-bande aval n'est pas présent, ou s'il est inutile, le filtre passe-bande amont doit être plus sélectif pour que la sélectivité globale voulue soit atteinte. Or, un filtre est d'autant plus coûteux qu'il est sélectif. L'amplificateur à faible bruit et le mélangeur sont, de par leur fonctionnement, des circuits non linéaires, l'amplificateur présentant toutefois une zone de fonctionnement linéaire. Ainsi les deux filtres passe-bande amont et aval évitent des problèmes de saturation de ces circuits ou des mélanges de fréquences parasites.

Cette solution présente des problèmes. En effet, les deux filtres passe-bande amont et aval introduisent des pertes. Ces pertes se traduisent par une diminution d'un rapport signal à bruit et donc par une augmentation d'un taux d'erreur binaire. En outre, un dispositif de réception comportant certains éléments électroniques est définie par un facteur de bruit. Le facteur de bruit caractérise l'aptitude du récepteur à recevoir des signaux de faible puissance, notamment de l'ordre de -100 dBm. Avec cette structuration du dispositif de réception, le facteur de bruit global du dispositif de réception dépend principalement d'un facteur de bruit des filtres passe-bande amont et aval et d'un facteur de bruit de l'amplificateur à faible bruit. Les deux valeurs de facteur de bruit les plus importantes sont celles du filtre passe-bande et de l'amplificateur à faible bruit. Le facteur de bruit du filtre passe-bande aval est masqué par le gain élevé de l'amplificateur à faible bruit. Ainsi on obtient un facteur de bruit global de l'ordre d'un produit entre le facteur de bruit du filtre passe-bande amont et un facteur de bruit de l'amplificateur à faible bruit.

En fait, à ce bruit global viennent s'ajouter d'autres bruits qui diminuent encore le rapport signal à bruit. Ainsi, même si tous les autres bruits peuvent être annulés ou compensés, alors il restera toujours un facteur de bruit égal au produit précédent. Ceci définit un seuil minimum de détection qui actuellement est de l'ordre de -106 dBm pour des signaux de la norme DCS ou PCS et de l'ordre de -109 dBm pour des signaux de la bande GSM.

De plus, réaliser un filtre passe-bande sélectif coûte cher. Un dispositif de réception comporte deux filtres passe-bande sélectifs. Or, avec une telle architecture dans un téléphone mobile multibande, on a autant de filtres passe-bande amont et aval que de bandes à sélectionner. Dans certains cas, une entrée d'un amplificateur à faible bruit est reliée à des sorties de filtres passe-bande amont dont les bandes de fréquences sont proches. Deux bandes de fréquences sont proches lorsque, pour les normes précitées, elles sont à moins d'une centaine de mégaHertz l'une de l'autre. Il en est ainsi, par exemple, d'une bande de fréquences associée à la norme DCS et d'une bande de fréquences associée à la norme PCS dont les valeurs des largeurs des bandes de fréquences vont de 1805 à 1880 MHz et de 1930 à 1990 MHz respectivement. On peut également envisager dans ce cas la gamme UMTS autour de 2100 MHz. Ainsi, deux filtres passe-bande amont associés à ces autour de 2100 MHz. Ainsi, deux filtres passe-bande amont associés à ces bandes de fréquences sont reliés à un même amplificateur à faible bruit. Un filtre passe-bande amont associé à une bande de fréquences selon la norme GSM, par exemple et dont une valeur de fréquence est comprise entre 925 et 960 MHz, a une sortie reliée à un autre amplificateur à faible bruit. Les bandes de fréquences citées ci-dessus s'entendent comme étant des bandes de fréquences destinées à une réception d'un signal par un téléphone mobile.

Ainsi une telle architecture comporte trois filtres passe-bande amont, deux amplificateurs à faible bruit, et trois filtres passe-bande aval. On obtient ainsi deux voies dédiées de réception, une première voie dédiée destinée au traitement d'un signal émis dans la bande GSM et une deuxième voie dédiée destinée au traitement d'un signal émis dans la bande DCS, PCS ou UMTS. En outre, une valeur de fréquence centrale des filtres passe-bande amont et aval est fixe. Pour permettre de sélectionner une des deux voies, un circuit de commutation, ou diplexeur, est utilisé. Ce diplexeur comporte une entrée reliée à l'antenne et deux sorties chacune étant reliée à une voie de réception. Si on veut recevoir des signaux dans une autre bande de fréquence il faut ajouter autant de filtres passe-bande amont et aval que de nouvelles bandes à sélectionner et éventuellement un autre amplificateur à faible bruit dans le cas où la bande de fréquence ne serait proche d'aucune des autres bandes de fréquence. Dans le cas UMTS, il y a en outre un duplexeur émission réception.

Le document EP-A-0 951 147 décrit un dispositif et un procédé pour régler l'un des étages amplificateurs haute fréquence d'un récepteur d'appareil radioélectrique.

Une première réalisation a tenté de remédier à ces problèmes en réalisant un dispositif de réception dans lequel on diminue un nombre de filtres et on obtient un seuil minimum de détection plus bas, et donc un facteur de bruit global meilleur. Pour ce faire, dans cette réalisation, on relie directement l'antenne du téléphone mobile à une entrée d'un seul amplificateur à faible bruit. L'amplificateur à faible bruit est réalisé de manière à ce que la bande passante de cet amplificateur soit suffisante pour laisser passer indifféremment des signaux dans la bande GSM ou DCS ou PCS dans le cas par exemple d'un téléphone mobile réalisé pour recevoir des signaux issus de ces trois bandes de fréquences. Cela signifie qu'une bande passante d'un tel amplificateur doit être de 925 à 2200 MHz.

Dans l'état de la technique, un point de compression à 1 dB d'un amplificateur à faible bruit est de l'ordre de -15 dBm. Le point de compression à 1 dB permet de connaître quelle valeur de puissance du signal en entrée de l'amplificateur produit un écart de linéarité d'amplification de cet amplificateur de 1 dB. Ce point correspond donc à un début de saturation de l'amplificateur à faible bruit. En effet, un filtre passe-bande amont étant absent, l'amplitude des signaux en entrée n'est plus atténuée de façon à éviter la saturation de l'amplificateur à faible bruit. Dans la première réalisation, le point de compression à 1 dB de cet amplificateur à faible bruit doit être portée à une valeur de l'ordre de ou supérieur à 0 dBm.

Cette augmentation de linéarité de l'amplificateur à faible bruit se traduit par une consommation en courant plus élevée. Pour remédier à ce problème cette première réalisation propose en outre un procédé de réception dans lequel on va réguler une valeur de courant et ou de tension de polarisation de l'amplificateur à faible bruit. La régulation dépend d'une mesure du taux d'erreur et met ainsi en oeuvre un dispositif de régulation encombrant.

La présente invention a pour objet de résoudre le problème de consommation en proposant un amplificateur faible bruit et large bande réalisé dans une technologie différente de celle de l'amplificateur à faible bruit dont le point de compression à 1 dB est de 0dBm. Une technologie utilisée est la technologie silicium-germanium. On observe une réduction du courant consommé par cet amplificateur aux environs de 5 mA au lieu de 40 mA avec l'amplificateur de la première réalisation.

Une particularité de cette technologie est d'offrir une meilleure résistance à la distorsion d'intermodulation. En outre, cette technologie permet d'obtenir un amplificateur dont une fréquence de transition est plus élevée que pour une technologie au silicium et une consommation pour atteindre cette fréquence de transition est plus faible.

Un autre avantage provient du fait que le point de compression à 1 dB de cet amplificateur est aux environs de -15 dBm. Les signaux présentant une puissance plus forte, tels que des brouilleurs, seront atténués naturellement par l'amplificateur qui est donc saturé pour de telles signaux, le signal utile n'étant pas modifié.

L'invention concerne donc un dispositif de réception d'un signal radiofréquence dans un téléphone mobile comportant :
- une antenne,
- un amplificateur à faible bruit avec une entrée et une sortie, et
- un dispositif de filtrage passe-bande aval,
caractérisé en ce que
- l'entrée de l'amplificateur à faible bruit est directement reliée à l'antenne par une liaison dépourvue de filtre sélectif,
- le dispositif de filtrage passe-bande aval comporte un premier filtre passe-bande aval centré sur une fréquence centrale F₁ et un deuxième filtre passe-bande aval centré sur une fréquence centrale F₂,
en ce que
- la fréquence F₂ est de l'ordre du double de la fréquence F₁,
- la sortie de l'amplificateur est reliée à une entrée du premier filtre passe-bande aval et à une entrée du deuxième filtre passe-bande aval,
et en ce que :
- l'amplificateur est réalisé dans une technologie Silicium-Germanium.

L'invention a encore pour objet un dispositif de réception d'un signal radiofréquence dans un téléphone mobile comportant :
- une antenne,
- un amplificateur à faible bruit avec une entrée et une sortie, et
- un dispositif de filtrage passe-bande aval,
caractérisé en ce que
- l'entrée de l'amplificateur à faible bruit est directement reliée à l'antenne par une liaison dépourvue de filtre sélectif,
- le dispositif de filtrage passe-bande aval comporte un premier filtre passe-bande aval centré sur une fréquence centrale F₁ et un deuxième filtre passe-bande aval centré sur une fréquence centrale F₂,
en ce que
- la fréquence F₂ est de l'ordre du double de la fréquence F₁,
- la sortie de l'amplificateur est reliée à une entrée du premier filtre passe-bande aval et à une entrée du deuxième filtre passe-bande aval,
et en ce que :
- l'amplificateur comporte un transistor d'amplification autopoiarisé par une liaison directe d'une de ses bornes à un potentiel de référence.

Dans un exemple le potentiel de référence est la masse du circuit

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
- Figure 1 : un dispositif de réception selon l'état de la technique ;
- Figure 2 : un dispositif de réception selon l'invention ;
- Figure 3 : un exemple d'un amplificateur de l'état de la technique;
- Figure 4 : un exemple de réalisation d'un amplificateur faible bruit selon l'invention ;
- Figure 5 et 6 : des courbes permettant de comprendre le phénomène d'autopolarisation et son utilisation dans l'invention.

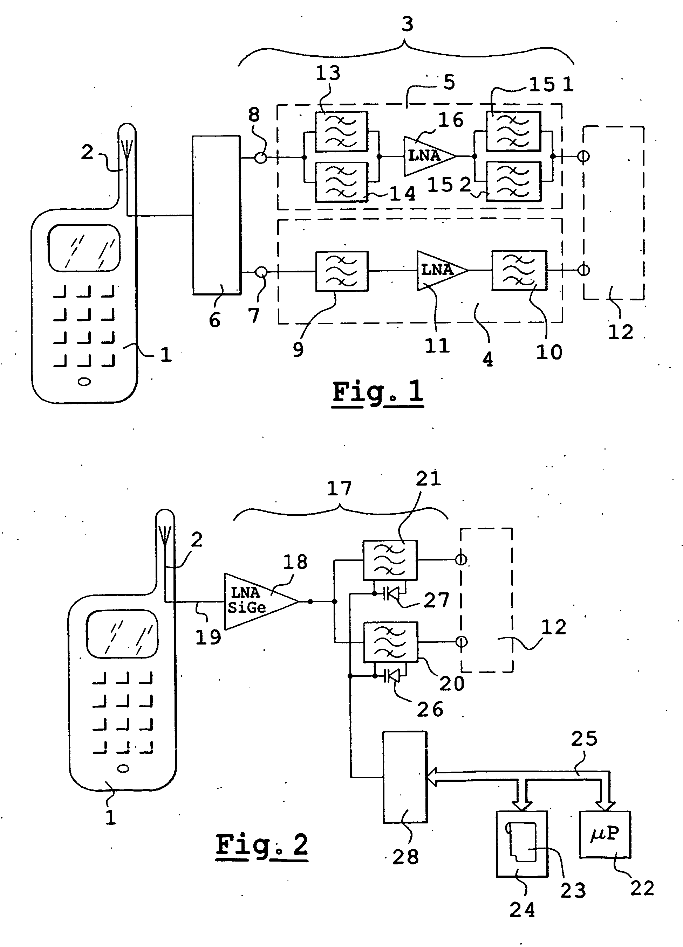

La figure 1 montre un téléphone mobile 1 selon l'état de la technique. Ce téléphone mobile 1 comporte une antenne 2 et un dispositif de réception 3. Actuellement, les téléphones mobiles peuvent émettre et/ou recevoir des signaux radioélectriques selon plusieurs normes telles que la norme GSM, AMPS, DCS, PCS, DECT, UMTS, ou d'autres encore. Des signaux émis et/ou reçus suivant la norme GSM ou AMPS sont des signaux à une fréquence de l'ordre de 900 MHz. Des signaux émis suivant la norme DCS, PCS, UMTS ou DECT sont quant à eux des signaux à une fréquence de l'ordre de, ou supérieure à, 1900 MHz. Dans ce cas, le dispositif de réception 3 comporte dans l'état de la technique deux voies dédiées 4 et 5 de réception.

La voie dédiée 4 permet de recevoir des signaux à une fréquence de l'ordre de 900 MHz. La voie dédiée 5 permet de recevoir des signaux à une fréquence de l'ordre de 1900 MHz. Une liaison entre ces deux voies et l'antenne 2 est réalisée par l'intermédiaire d'un circuit diplexeur 6 avec une entrée et deux sorties 7 et 8. L'entrée du circuit diplexeur 6 est reliée à l'antenne 2. Les sorties 7 et 8 du circuit diplexeur 6 sont reliées aux voies dédiées 4 et 5 respectivement.

Dans un exemple, on considère que le téléphone mobile 1 peut recevoir des signaux à une fréquence selon la norme GSM, DCS ou PCS. Le circuit diplexeur 6 permet de sélectionner la voie dédiée 4 ou 5 à utiliser à la demande. Dans le cas d'un signal émis selon la norme GSM le circuit diplexeur 6 relie l'antenne 2 à la sortie 7. La voie dédiée 4 comporte un filtre passe-bande amont 9, un filtre passe-bande aval 10 et un amplificateur à faible bruit 11.

Les filtres passe-bande amont 9 et aval 10 sont centrés sur une fréquence permettant de sélectionner la bande de fréquences définie dans la norme GSM. Une entrée du filtre passe-bande amont 9 est reliée à la sortie 7 du circuit diplexeur 6. La sortie de ce filtre passe-bande amont 9 est reliée à une entrée de l'amplificateur à faible bruit 11. Ce filtre passe-bande amont 9 permet, excepté sa fonction de filtrage, d'éviter que des signaux reçue par l'antenne 2 ne soient transmis à l'amplificateur à faible bruit 11 avec une valeur de puissance trop grande.

En général, une puissance maximale admissible en entrée de l'amplificateur à faible bruit 11 est de l'ordre de -15 dBm. Ainsi, ce filtre passe-bande amont 9 permet à l'amplificateur à faible bruit 11 de fonctionner d'une manière linéaire et ce tant qu'un point de compression à 1 dB, de l'ordre de -15 dBm, n'est pas atteint par ce signal d'entrée. Une sortie de l'amplificateur à faible bruit 11 est reliée à une entrée du filtre passe-bande aval 10. Une sortie de ce filtre 10 est reliée à une entrée d'un circuit de démodulation 12 du téléphone mobile 1. Le filtre passe-bande aval 10 permet de filtrer des signaux parasites que l'amplificateur à faible bruit 11 pourrait produire ou simplement amplifier. Dans le cas contraire ces signaux parasites seraient envoyés au circuit de démodulation 12. Ainsi, ces deux filtres passe-bande amont 9 et aval 10 doivent pouvoir atténuer des signaux parasites, tels que des signaux émis par d'autres téléphones mobiles, d'au moins 15 dB.

La voie dédiée 5, traitant des signaux émis selon la norme DCS ou PCS, comporte deux filtres passe-bande amont 13 et 14 montés en parallèle via un moyen de commutation non représenté, deux filtres passe-bande aval 15 1 et 15 2 et un amplificateur à faible bruit 16. Le moyen de commutation permet de n'avoir qu'un seul filtre passe-bande amont actif à la fois. Le filtre passe-bande amont 13 est centré sur une valeur de fréquence permettant de sélectionner la bande de fréquences définie dans la norme DCS. Le filtre passe-bande amont 14 permet de sélectionner la bande de fréquences définie dans la norme PCS. Les entrées des filtres passe-bande amont 13 et 14 sont reliées à la sortie 8 du circuit diplexeur 6. Les sorties de ces filtres passe-bande amont 13 et 14 sont reliées à une entrée de l'amplificateur à faible bruit 16. Une sortie de cet amplificateur à faible bruit 16 est reliée à une entrée des filtres passe-bande aval 15 1 et 15 2. La sortie de ces filtres passe-bande aval 15 1 et 15 2 est reliée à une autre entrée du circuit de démodulation 12. Le fonctionnement de la voie dédiée 5 est identique au fonctionnement de la voie dédiée 4 sauf qu'elle s'applique aux normes DCS et PCS.

On précise en outre que les filtres passe-bande 9, 10, 13, 14 et 15 1 et 15 2 sont centrés sur une valeur de fréquence fixe. Dans ce cas, une fois le téléphone mobile 1 réalisé, on ne peut plus modifier les valeurs de fréquence centrales des filtres. Ainsi, avec une telle architecture figée du dispositif de réception 3, on peut détecter des signaux dont une valeur de puissance est de l'ordre de -106 dBm.

La figure 2 montre le téléphone mobile 1 selon l'invention. Dans l'invention, le téléphone mobile 1 comporte un dispositif de réception 17. Ce dispositif de réception 17 comporte un amplificateur à faible bruit 18 avec une entrée et une sortie. L'entrée de cet amplificateur à faible bruit 18 est reliée directement à l'antenne 2 du téléphone mobile 1 par un câble conducteur 19. La liaison est au moins dépourvue de filtre sélectif. Le dispositif de réception 17 comporte en outre deux filtres passe-bande aval 20 et 21 avec une entrée et une sortie. Les entrées des filtres passe-bande aval 20 et 21 sont reliées à la sortie de l'amplificateur à faible bruit 18. Ces filtres passe-bande aval 20 et 21 sont centrés sur des fréquences F1 et F2 respectivement. La valeur de la fréquence F2 est de l'ordre du double de la valeur de la fréquence F1. Dans un exemple, le téléphone mobile 1 peut recevoir des signaux émis suivant la norme GSM ou suivant la norme PCS. La fréquence F1 est telle qu'elle permet de sélectionner la bande définie par la norme GSM et la fréquence F2 permet de sélectionner la bande définie par la norme PCS.

Dans l'invention le dispositif de réception 17 ne comporte pas de filtre passe-bande amont afin de filtrer et atténuer des signaux reçus sur l'antenne 2, selon une valeur de fréquence à laquelle ils ont été émis. Ainsi, l'amplificateur à faible bruit 18 est réalisé différemment des amplificateurs à faible bruit 11 et 16. En effet, l'amplificateur 18 est réalisé, selon une caractéristique essentielle de l'invention, en utilisant une technologie silicium-germanium. En conséquence, des signaux parasites en entrée de l'amplificateur à faible bruit 18 peuvent avoir une valeur de puissance supérieure à -15 dBm, ce dernier présentant un facteur de bruit qui ne se dégrade quasiment pas en présence de brouilleurs à 0 dBm. Ainsi, une consommation de l'amplificateur 18 reste de l'ordre de 5 mA. Il n'y a donc pas besoin, avec cette technologie, d'augmenter la consommation de l'amplificateur 18 afin d'assurer une bonne linéarité et ne pas dégrader le facteur de bruit. En effet, il est connu de l'état de la technique de faire consommer plus l'amplificateur pour augmenter sa plage de linéarité.

Un tel amplificateur 18 est généralement réalisé autour d'un transistor intégré. Ce transistor représente donc l'élément fondamental de ce circuit intégré et c'est ce dernier qui est réalisé en utilisant comme matériau sémi-conducteur un mélange silicium germanium.

En conséquence, des signaux parasites reçus sur l'antenne 2 et dont une valeur de puissance est supérieure à -15 dBm ne créent pas de distorsion en sortie de l'amplificateur à faible bruit 18.

En outre, comme il n'y a pas, dans l'invention de filtre passe-bande amont alors tous les signaux reçus par l'antenne 2 sont appliqués en entrée de l'amplificateur à faible bruit 18. Une sélection de la bande utile est faite par les filtres passe-bande aval 20 et 21. Ainsi, l'amplificateur 18 doit pouvoir laisser passer des signaux dont une valeur de fréquence se trouve dans une bande GSM ou PCS ce qui implique une bande passante de cet amplificateur à faible bruit 18 très nettement supérieure à la bande passante des amplificateurs à faible bruit 11 et 16. Dans cet exemple, l'amplificateur à faible bruit 18 doit avoir une bande passante qui va de 925 MHz à 2200 MHz. Ceci n'est qu'un exemple, en effet, dans un autre exemple, si on désire recevoir des signaux émis selon la norme GSM ou AMPS ou PCS ou DCS ou DECT dans ce cas la bande passante de l'amplificateur à faible bruit 18 doit aller de 869 MHz à 2200 MHz. La valeur de 869 MHz correspond à la plus faible valeur de fréquence de la bande de fréquences AMPS. La valeur de 1990 MHz correspond à la plus grande valeur de fréquence de la bande de fréquences PCS. Dans ce cas il y a autant de filtres passe-bande aval que de bandes de fréquences à sélectionner, c'est à dire dans cet exemple cinq.

Dans une variante préférée, les fréquences centrales F1 et ou F2 des filtres passe-bande aval 20 et 21 respectivement sont variables. Ainsi, le dispositif de l'invention comporte un microprocesseur 22 commandé par un programme 23 placé dans une mémoire de programme 24 et ce par l'intermédiaire d'un bus 25. Une valeur d'une fréquence F1 et ou F2 est sélectionnée à la demande par l'intermédiaire du microprocesseur 22 commandé par le programme 23. Ceci a pour conséquence de réduire le nombre de filtres passe-bande aval à deux, voire à un seul filtre passe-bande aval.

Chaque filtre passe-bande aval 20 ou 21 comporte une diode Varicap 26 ou 27 respectivement avec une anode et une cathode. Une valeur de capacité des condensateurs équivalents de ces diodes Varicap 26 et 27 est utilisée par les filtres 20 et 21 afin de sélectionner une fréquence centrale F1 ou F2 respectivement. Dans un exemple préféré, les fréquences F1 et F2 sont rendues variables grâce à une application d'un potentiel sur les cathodes des diodes Varicap 26 et 27. On aurait tout aussi bien pu appliquer les potentiels sur les anodes des diodes Varicap 26 et 27. Pour ce faire le dispositif de l'invention comporte un dispositif d'alimentation 28. Ce dispositif d'alimentation 28 reçoit sur une entrée, du microprocesseur 22, une information relative à une valeur de potentiel à appliquer aux diodes Varicap 26 et 27 et ce par l'intermédiaire du bus 25. Ce dispositif d'alimentation 28 comporte une sortie reliée dans un exemple préféré aux cathodes des diodes Varicap 26 et 27. Dans l'exemple préféré ce dispositif d'alimentation 28 est un convertisseur numérique analogique dont une entrée de commande est reliée au microprocesseur 22. Ce dispositif d'alimentation 28 a donc en charge de convertir une information, issue du microprocesseur 22, relative à une valeur de potentiel en un signal comportant au moins autant de valeurs de potentiel que de fréquences à sélectionner. Ainsi en fonction d'une valeur de potentiel sur les cathodes des diodes Varicap 26 ou 27 on obtient une fréquence F1 ou F2 permettant de sélectionner une bande de fréquences parmi toutes celles disponibles.

Dans le cas où on utilise deux filtres passe-bande aval, par exemple les filtres 20 et 21, alors avec le microprocesseur 22 on fait varier la fréquence F1 du filtre passe-bande aval 20 pour sélectionner soit la bande de fréquences GSM soit la bande AMPS. Avec le filtre passe-bande aval 21 on peut sélectionner une bande de fréquences parmi les bandes de fréquences DCS, DECT, PCS et UMTS. Dans cet exemple préféré, des bandes de fréquences réduites permettent de réaliser des filtres passe-bande aval plus simples. En effet, une contrainte quant à la sélectivité de ces filtres est moins importante que si un seul filtre passe-bande est utilisé ce qui augmente une bande passante dans laquelle la contrainte de sélectivité doit être respectée. Dans ce dernier cas le filtre passe-bande doit être sélectif de 869 MHz à 2200 MHz tout en sachant qu'une fréquence centrale de ce filtre est variable.

Dans l'état de la technique on ne peut pas augmenter la sélectivité des filtres 9, 13 et 14 car celle-ci s'accompagne d'une dégradation du signal. Dans l'invention cette dégradation du signal est compensée par le fait que le signal reçu par l'antenne 2 est d'abord amplifié par l'amplificateur à faible bruit 18 puis filtré par l'un des filtres 20 ou 21. Ainsi, on peut augmenter la sélectivité des filtres 20 et 21 car la dégradation apportée au signal est négligeable en regard de l'amplification que le signal a subi.

Dans un exemple préféré on met en oeuvre l'invention dans un téléphone mobile. On pourrait très bien mettre en oeuvre l'invention dans tout autre dispositif de réception d'un signal radiofréquence tel que par exemple un téléviseur ou un magnétoscope.

Dans l'état de la technique une liaison entre l'antenne 2 et les filtres 9, 13 et 14 est une liaison adaptée avec une impédance caractéristique notamment de 50 ohms. Ainsi si un utilisateur touche l'antenne 2 avec ses doigts ou tout du moins s'en approche, alors on aura une désadaptation de la liaison entre l'antenne 2 et les filtres passe-bande amont 9, 13 et 14 due à une variation locale de l'impédance caractéristique de cette liaison. Cette désadaptation se traduit par une perte de sensibilité des filtres passe-bande amont pouvant aller jusqu'à une valeur de 6 voire 7 dB de perte de sensibilité.

Dans l'invention, on réalise une liaison adaptée directement entre l'antenne 2 et l'amplificateur à faible bruit 18. Dans ce cas il n'y a plus de problème de sensibilité des filtres passe-bande amont. Une tolérance quant à la réalisation de l'adaptation de la liaison entre l'antenne 2 et l'amplificateur à faible bruit 18 est plus grande qu'entre l'antenne 2 et les filtres 9, 13 et 14 de l'état de la technique. Ce qui revient à dire que le dispositif de réception 17 est moins sensible à des variations d'impédance en entrée de l'amplificateur à faible bruit 18 qu'en entrée des filtres passe-bande amont 9,13 ou 14.

Ainsi, avec l'invention on augmente la sensibilité du dispositif de réception. En effet dans l'état de la technique pour des bandes de fréquences répondant à la norme DCS ou PCS on a un seuil de détection minimum de l'ordre de -106 dBm alors que dans l'invention le seuil de détection minimum passe à -111 dBm. Ceci représente environ un rapport de puissance de 3 c'est à dire qu'on peut détecter des signaux dont une valeur de puissance est trois fois plus faible. Dans la bande répondant à la norme GSM, on passe d'un seuil de détection minimum de l'ordre de -109 dBm à un seuil de détection minimum de l'ordre de -112 dBm. Dans ce cas cela signifie qu'on peut détecter des signaux dont une valeur de puissance est environ deux fois plus faible.

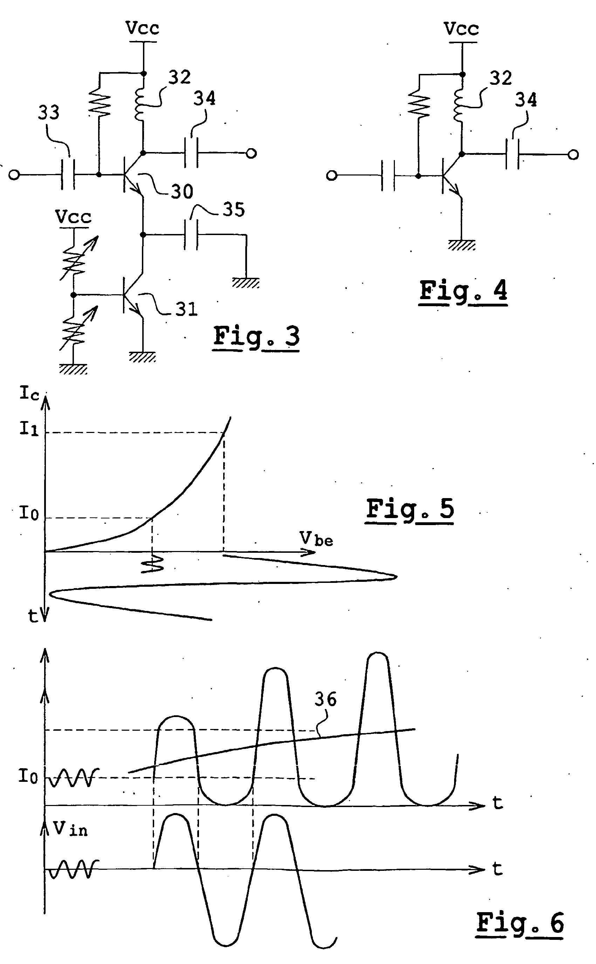

Dans l'état de la technique, il était habituel de réaliser un amplificateur à faible bruit selon un circuit conforme à celui de la figure 3. Dans celui-ci un transistor d'amplification 30 est polarisé par un circuit de commande en courant. Le circuit de commande en courant comporte en pratique un transistor 31 polarisé de manière classique. Pour le reste, le transistor 30, de type ici NPN, est monté, en haute fréquence, avec une inductance 32 de collecteur et reçoit le signal d'entrée sur sa base par un condensateur 33 en série. Il délivre le signal amplifié sur son collecteur par un condensateur en série 34. Pour éviter des effets de modification de polarisation, l'émetteur du transistor 30 était relié à une tension continue, de préférence la masse, par un condensateur en série 35. Un montage avec un transistor PNP, dual du montage avec un transistor 30 NPN, serait aussi envisageable.

Dans l'invention, on a d'abord choisi de mettre en place un transistor SiGe comme transistor 30, parce que ce transistor acceptait un point de compression plus haut. En pratique, on a alors été amené à réaliser le montage de la figure 4. La figure 4 est identique à la figure 3 sauf que le circuit de polarisation en courant 31 du montage de la figure 3 y est supprimé, de même que le condensateur 35 inutile du fait de la liaison directe de l'émetteur du transistor 30 à la masse. On s'est alors rendu compte que le transistor 30 se polarisait tout seul.

Il s'autopolarisait à une valeur qui dépendait de la hauteur des signaux admis en entrée. Ainsi, pour des petits signaux, la jonction en direct base-émetteur du transistor 30, associée aux capacités de cette jonction, amenait naturellement le transistor 30 à se polariser tout seul à un courant 10, figure 5. La figure 5 montre la caractéristique du courant instantané lc du transistor 30 en fonction de la tension Vbe entre sa base et son émetteur. Par contre, lorsque les signaux en entrée devenaient plus importants, le point de polarisation évoluait, par exemple depuis une valeur I0 vers une valeur I1 qui est plus grande que I0. On obtient alors un fonctionnement identique à une solution ancienne, mais bien plus simplement.

Dans cette solution ancienne, le courant de polarisation était abaissé lorsque des petit signaux étaient reçus, notamment en commandant le transistor 31 de manière variable, de manière à limiter la consommation du téléphone mobile. Par contre, lorsque des signaux forts étaient reçus (notamment lorsque des téléphones mobiles voisins émettaient des signaux parasites), dans la solution ancienne on mesurait la hauteur de ces signaux et on polarisait le transistor 30 différemment (notamment à l'aide du circuit 31) pour décaler le courant de polarisation, par exemple d'une valeur I0 à une valeur I1.

Dans l'invention, selon un mode de réalisation décrit ci-dessus, on a choisi comme transistor 30 un transistor SiGe dont les avantages vis à vis de son point de compression permettaient de se passer du décalage de polarisation.

Selon un autre mode de réalisation de l'invention, le circuit de polarisation est rendu automatique, par redressement des grands signaux dans la jonction base-émetteur du transistor 30. Ce redressement conduit à un courant non nul du fait de la forme parabolique de la caractéristique Ic-Vbe. En pratique, la valeur moyenne des alternances positives n'est pas limitée, alors que la valeur moyenne des alternances négatives est limitée. Ceci s'explique de la manière suivante. Alors que le transistor est soumis à des petits signaux, figure 6, il se polarise à une valeur I0 dont on verra la raison plus loin. Si, dans ces conditions il reçoit des grands signaux, des alternances (admettons qu'il s'agisse d'alternances positives) explorent la caractéristique Ic-Vbe là où elle ne rencontre pas de limite. Par opposition, les autres alternances négatives sont limitées par lc à la valeur 0 lorsque Vbe vaut 0. Donc la contribution des alternances dans le courant IC n'est pas égaies. Ceci est visible sur le diagramme temporel de la figure 6 où les alternances négatives du courant ont une forme écrasée. Il en résulte que leur contribution à la valeur moyenne, courbe 36, du courant d'autopolarisation est moindre que la contribution des alternances positives. Dans ces conditions, la courbe 36 montre une ascendance en fonction du temps (lorsque les signaux passent de petits à grands) de la valeur moyenne du courant d'autopolarisation. Cette ascendance résulte du redressement dans la jonction base-émetteur du transistor 30 du signal de tension Vin admis en entrée sur le condensateur 33. De ce fait, avec le redressement procuré par la jonction base-émetteur et l'intégration procurée par les capacités parasites, le courant moyen I0 dérive vers I1 (plus grand que I0). Le phénomène est le même pour passer de signaux nuls à des petits signaux, d'où l'existence de I0.

Ce faisant, on observe alors, en supprimant la polarisation en courant procurée par le circuit 31, qu'on obtient une autopolarisation procurée par le redressement de la jonction base émetteur. On a alors découvert que ce redressement se produisait quel que soit la technologie du transistor 30, pas seulement s'il est de type SiGe.

Bien entendu, les deux effets se conjuguent, un meilleur résultat pouvant être atteint par un transistor 30 de type SiGe avec une polarisation directe (émetteur à la masse pour un NPN). Mais le résultat d'autopolarisation peut être suffisant en lui-même seul. Ce résultat se produit alors même si le transistor 30 est un transistor silicium seulement.

L'allure fortement parabolique de la caractéristique Ic-Vbe, et la manière dont elle est exploitée, conduisent néanmoins, dans certains cas, à quelques difficultés. Ces difficultés sont rencontrées lorsque l'amplificateur d'entrée à faible bruit est chargé de détecter des signaux dans une bande, par exemple les bandes DCS PCS et UMTS, autour et au delà de 1800 MHz, alors que des brouilleurs (des téléphones mobiles voisins) émettent dans la bande GSM à 900 MHz. Du fait que la caractéristique est du type y=ax+bx², et que le coefficient b n'est pas du tout négligeable, il apparaît des problèmes de détection de petits signaux dans la bande à la fréquence double comparé à des grands signaux dans la bande à fréquence simple. Ces grands signaux contribuent, comme exposés jusqu'ici, à autopolariser le transistor 30 avec le courant I1 adéquat. De ce point de vue leur effet est bien compensé. Cependant, du fait de la présence d'harmoniques deux de ces signaux, ils possèdent des composantes, parasites, qui sont situées dans la bande à fréquence double, et qui perturbent la réception. Dans ce cas, dans l'invention, on ajoute en entrée de l'amplificateur à faible bruit, et pour la réception des signaux à la fréquence double F2 (autour et au dessus de 1800 MHz), un filtre réjecteur large bande, centré sur une fréquence F1 de l'ordre de la moitié de cette fréquence double F2. Etant large bande, et peu sélectif, le filtre d'entrée n'ajoute pas de bruit, n'est pas difficile à fabriquer, et est peu onéreux. Le filtre large bande réjecteur est cependant capable de rejeter avec efficacité la composante basse fréquence à la fréquence F1.

## Revendications

1. Dispositif de réception (17) d'un signal radiofréquence dans un téléphone mobile (1) comportant :
- une antenne (2),
- un amplificateur à faible bruit (18) avec une entrée et une sortie, et
- un dispositif de filtrage passe-bande aval (20, 21),
- l'entrée de l'amplificateur à faible bruit est directement reliée à l'antenne par une liaison dépourvue de filtre sélectif (19),
**caractérisé en ce que**
- le dispositif de filtrage passe-bande aval comporte un premier filtre passe-bande aval (20) centré sur une fréquence centrale F₁ et un deuxième filtre passe-bande aval (21) centré sur une fréquence centrale F₂,
- la fréquence F₂ est de l'ordre du double de la fréquence F₁,
- la sortie de l'amplificateur est reliée directement à une entrée du premier filtre passe-bande aval et à une entrée du deuxième filtre passe-bande aval,
et **en ce que** :
- l'amplificateur est réalisé dans une technologie Silicium-Germanium.

2. Dispositif de réception d'un signal radiofréquence dans un téléphone mobile comportant :
- une antenne,
- un amplificateur à faible bruit avec une entrée et une sortie, et
- un dispositif de filtrage passe-bande aval,
- l'entrée de l'amplificateur à faible bruit est directement reliée à l'antenne par une liaison dépourvue de filtre sélectif
**caractérisé en ce que**
- le dispositif de filtrage passe-bande aval comporte un premier filtre passe-bande aval centré sur une fréquence centrale F₁ et un deuxième filtre passe-bande aval centré sur une fréquence centrale F₂,
- la fréquence F₂ est de l'ordre du double de la fréquence F₁,
- la sortie de l'amplificateur est reliée **directement** à une entrée du premier filtre passe-bande aval et à une entrée du deuxième filtre passe-bande aval,
et **en ce que** :
- l'amplificateur comporte un transistor d'amplification autopolarisé par une liaison directe d'une de ses bornes à un potentiel de référence.

3. Dispositif de réception selon l'une des revendications 1 à 2, **caractérisé en ce qu'**il comporte des moyens pour que les fréquences F₁ et ou F₂ soient variables, et un microprocesseur (22) pour sélectionner une valeur de F₁ et ou F₂ à la demande.

4. Dispositif de réception selon la revendication 3 **caractérisé en ce que** pour faire varier les fréquences F₁ et ou F₂ chaque filtre comporte une diode varicap (26, 27) avec une anode et une cathode et **en ce que**
- l'anode et ou la cathode de ces diodes varicap sont reliées à un dispositif d'alimentation (28), notamment un convertisseur numérique analogique, avec une entrée de commande reliée au microprocesseur (22).

5. Dispositif de réception selon l'une des revendications 1 à 4 **caractérisé en ce que**
- la fréquence F₁ du premier filtre passe-bande aval (20) est une fréquence comprise dans une bande de fréquence allant de 869 MHz à 960 MHz,
- la fréquence F₂ deuxième filtre passe-bande aval (21) est une fréquence comprise dans une bande de fréquence allant de 1805 MHz à 2200 MHz.

6. Dispositif selon l'une des revendications 1 à 5, **caractérisé en ce qu'**il comporte en entrée un filtre réjecteur large bande centré sur la fréquence centrale F₁.

## Patentansprüche

1. Empfangsvorrichtung (17) für ein Funkfrequenzsignal in einem Mobiltelefon (1), umfassend:
- eine Antenne (2),
- einen geräuscharmen Verstärker (18) mit einem Eingang und einem Ausgang, und
- eine stromaufwärtige Bandfiltervorrichtung (20, 21)
- wobei der Eingang des geräuscharmen Verstärkers direkt mit der Antenne über eine Verbindung ohne Auswahlfilter (19) verbunden ist,
**dadurch gekennzeichnet, dass**
- die stromaufwärtige Bandfiltervorrichtung einen ersten stromaufwärtigen Bandfilter (20), der auf eine Zentralfrequenz F₁ zentriert ist, und einen zweiten stromaufwärtigen Bandfilter (21), der auf eine Zentralfrequenz F₂ zentriert ist, umfasst,
- die Frequenz F₂ ungefähr das Doppelte der Frequenz F₁ ausmacht,
- der Ausgang des Verstärkers direkt mit einem Eingang des ersten stromaufwärtigen Bandfilters und einem Eingang des zweiten stromaufwärtigen Bandfilters verbunden ist,
und **dadurch**, dass
- der Verstärker in Silizium-Germanium-Technologie hergestellt ist.

2. Empfangsvorrichtung für ein Funkfrequenzsignal in einem Mobiltelefon, umfassend:
- eine Antenne,
- einen geräuscharmen Verstärker mit einem Eingang und einem Ausgang, und
- eine stromaufwärtige Bandfiltervorrichtung,
- wobei der Eingang des geräuscharmen Verstärkers direkt mit der Antenne über eine Verbindung ohne Auswahlfilter verbunden ist,
**dadurch gekennzeichnet, dass**
- die stromaufwärtige Bandfiltervorrichtung einen ersten stromaufwärtigen Bandfilter, der auf eine Zentralfrequenz F₁ zentriert ist, und einen zweiten stromaufwärtigen Bandfilter, der auf eine Zentralfrequenz F₂ zentriert ist, umfasst,
- die Frequenz F₂ ungefähr das Doppelte der Frequenz F₁ ausmacht,
- der Ausgang des Verstärkers direkt mit einem Eingang des ersten stromaufwärtigen Bandfilters und einem Eingang des zweiten stromaufwärtigen Bandfilters verbunden ist,
und **dadurch**, dass
- der Verstärker einen Verstärkungstransistor umfasst, der durch eine direkte Verbindung einer seiner Klemmen mit einem Referenzpotential autopolarisiert ist.

3. Empfangsvorrichtung nach einem der Ansprüche 1 bis 2, **dadurch gekennzeichnet, dass** sie Mittel, damit die Frequenzen F₁ und F₂ variabel sind, und einen Mikroprozessor (22) umfasst, um einen Wert von F₁ und/oder F₂ auf Anforderung auszuwählen.

4. Empfangsvorrichtung nach Anspruch 3, **dadurch gekennzeichnet, dass** für die Variation die Frequenzen F₁ und F₂ jeder Filter eine Varicap-Diode (26, 27) mit einer Anode und einer Kathode umfasst und dass
- die Anode und/oder die Kathode dieser Varicap-Dioden mit einer Versorgungseinrichtung (28) insbesondere einem Digital-Analog-Umsetzer mit einem Steuereingang, der an einen Mikroprozessor (22) angeschlossen ist, verbunden sind.

5. Empfangsvorrichtung nach einem der Ansprüche 1 bis 4, **dadurch gekennzeichnet, dass**
- die Frequenz F₁ des ersten stromaufwärtigen Bandfilters (20) eine Frequenz ist, die in einem Frequenzband von 869 MHz bis 960 MHz liegt,
- die Frequenz F₂ des zweiten stromaufwärtigen Bandfilters (21) eine Frequenz ist, die in einem Frequenzband von 1805 MHz bis 2200 MHz liegt.

6. Vorrichtung nach einem der Ansprüche 1 bis 5, **dadurch gekennzeichnet, dass** sie am Eingang einen Breitbandsperrfilter umfasst, der auf die Zentralfrequenz F₁ zentriert ist.

## Claims

1. Device for the reception (17) of a radiofrequency signal in a mobile telephone (1) comprising:
- an antenna (2),
- a low-noise amplifier (18) with one input and one output, and
- a downstream bandpass filtering device (20, 21)
- the input of the low-noise amplifier is directly connected to the antenna by a link without selective filter (19)
**characterised in that**
- the downstream bandpass filtering device has a first downstream bandpass filter (20) centred on a centre frequency F₁ and a second downstream bandpass filter (21) centred on a centre frequency F₂,
- the frequency F₂ is about double the frequency F₁,
- the output of the amplifier is connected directly to one input of the first downstream bandpass filter and one input of the second downstream bandpass filter,
and **in that**:
- the amplifier is made with silicon-germanium technology.

2. Device for the reception (17) of a radiofrequency signal in a mobile telephone (1) comprising:
- an antenna (2),
- a low-noise amplifier (18) with one input and one output, and
- a downstream bandpass filtering device (20, 21)
- the input of the low-noise amplifier is directly connected to the antenna by a link without selective filter (19)
**characterised in that**
- the downstream bandpass filtering device has a first downstream bandpass filter (20) centred on a centre frequency F₁ and a second downstream bandpass filter (21) centred on a centre frequency F₂,
- the frequency F₂ is about double the frequency F₁,
- the output of the amplifier is connected directly to one input of the first downstream bandpass filter and one input of the second downstream bandpass filter,
and **in that**:
- the amplifier has an amplification transistor self-biased by a direct link of one of its terminals to a reference.

3. A device according to one of the claims 1 to 2, **characterised in that** it comprises means so that the frequencies F₁ and/or F₂ are variable, and a microprocessor (22) to select a value F₁ and/or F₂ as required.

4. A reception device according to claim 3 **characterised in that**, to obtain a variation in the frequencies F₁ and/or F₂ each filter has a varicap diode (26, 27) with one anode and one cathode, and **in that**
- the anode and/or the cathode of these varicap diodes are connected to a power supply device (28), in particular a digital/analog converter with one control input connected to the microprocessor (22).

5. A device according to one of the claims 1 to 4 **characterised in that**
- the frequency F₁ of the first downstream bandpass filter (20) is a frequency included in a frequency band ranging from 869 MHz to 960 MHz,
- the frequency F₂ of the second downstream bandpass filter (21) is a frequency included in a frequency band ranging from 1805 MHz to 2200 MHz.

6. A device according to one of the claims 1 to 5, **characterised in that** it comprises a low-selective wideband rejection filter at input, centred on the central frequency F₁.
